(19) Europäisches Patentamt
European Patent Office
Office européen des brevets

(11) **EP 1 872 837 A1**

(12) **EUROPEAN PATENT APPLICATION**

(43) Date of publication:
**02.01.2008  Bulletin 2008/01**

(51) Int Cl.:
***A63F 13/12*** *(2006.01)*

(21) Application number: **06270064.6**

(22) Date of filing: **29.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Microsoft Corporation**
**Redmond WA 98052 (US)**

(72) Inventors:
• **Herbrich, Ralf,**
**Microsoft Research Ltd.,**
**Cambridge, Cambridgeshire CB3 0FB (GB)**

• **Butcher, Christopher**
**Redmond, WA 98052 (US)**
• **Graepel, Thore,**
**Microsoft Research Ltd.,**
**Cambridge, Cambridgeshire CB3 0FB (GB)**

(74) Representative: **Free, Rachel Alder**
**Olswang**
**90 High Holborn**
**London**
**WC1V 6XX (GB)**

(54) **Updating relative skills of players**

(57)     Existing player ranking methods, for example, those using simple score-summation ranking, often suffer from problems related to reduced player satisfaction and players becoming dis-incentivised. We address this by determining a first indication of the relative skill of players of a game, updating those indications fully in the light of a game outcome to find a second indication, and then determining a revised indication of the relative skill being between the first and second indications. The indications of relative skill are related to belief distributions associated with belief about skill of players. The revised indication is determined using a level of update which may be adjusted to incentivise players and for other purposes.

FIG. 1

EP 1 872 837 A1

## EP 1 872 837 A1

**Description**

TECHNICAL FIELD

This description relates generally to determining relative skills of players of a game such as a computer game or any other type of game. It is particularly related to, but in no way limited to, using Bayesian statistical techniques to rank players on the basis of outcomes of a plurality of games involving those players.

BACKGROUND

There is a desire to provide a way to determine relative skills of players of games such as computer games, chess, tennis, and any other type of game. This needs to be achieved in a manner whereby the indication of relative skill is as accurate as possible and also is understood and accepted by end users (i.e. game players). In addition the relative skills need to be determined quickly even in the case of games involving many players and also in the case of many teams of players, each team having many members. Skills need to be determined quickly in the sense of not requiring a player to play too many games before his or her skills are correctly estimated. Players can be human players or computer programs.

Existing player ranking methods, for example, those using simple score-summation ranking, often suffer from problems related to reduced player satisfaction and players becoming dis-incentivised. For example, if a player is new to a game the player usually has a steep learning curve which results in a lower playing strength in the first few games. As a result that player may not achieve a rank on a ranking system being used during those first few games. However, not achieving any rank at all often discourages players. Also, an average player might plateau so that his or her rank remains approximately the same over many games. Again, this can be discouraging for that player. In the case that players form teams that play against each other related problems arise where players of different abilities are members of the same team.

The present invention seeks to provide an improved method and apparatus for determining an indication of the relative skill of players of a game which overcomes or at least mitigates one or more of the problems noted above.

SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

Existing player ranking methods, for example, those using simple score-summation ranking, often suffer from problems related to reduced player satisfaction and players becoming dis-incentivised. We address this by determining a first indication of the relative skill of players of a game, updating those indications fully in the light of a game outcome to find a second indication, and then determining a revised indication of the relative skill being between the first and second indications. The indications of relative skill are related to belief distributions associated with belief about skill of players. The revised indication is determined using a level of update which may be adjusted to incentivise players and for other purposes.

The present example provides a method of determining an indication of the relative skill of at least a first player and a second player of a game based on the outcome of one or more such games involving those players said method comprising the steps of:

- for each player, accessing at least one first statistic describing a probability distribution associated with belief about skill of that player;
- receiving information about the outcome of one of the games;
- forming at least one second statistic for each player by updating the at least one first statistics on the basis of the game outcome;
- determining at least one third statistic for each player, values of the third statistic being between the values of the associated first and second statistics.

A corresponding apparatus is provided:

An apparatus for determining an indication of the relative skill of at least a first player and a second player of a game based on the outcome of one or more such games involving those players said apparatus comprising:

- an input arranged to access, for each player, at least one first statistic describing a probability distribution associated

2

with belief about skill of that player;

- an input arranged to receive information about the outcome of one of the games;
- a processor arranged to form at least one second statistic for each player by updating the at least one first statistics on the basis of the game outcome;
- a partial updater arranged to determine at least one third statistic for each player, values of the third statistic being between the values of the associated first and second statistics.

Preferably the at least one third statistic is formed such that its value between the associated first and second statistics is determined according to a level of update.

Preferably the level of update is determined on the basis of one or more of: input received from a player; information about a level of experience of a player; information about whether players have repeatedly played against one another; information about whether any of the players are members of a team.

Preferably the method further comprises setting the first statistics equal to the third statistics and repeating the method.

In some examples the method is repeated for the same players playing against one another a plurality of times and wherein the level of update is controlled such that a cumulation of the levels of update used is below a threshold.

Preferably the third statistics are determined by making an interpolation between the first and third statistics. Preferably the interpolation is made in a canonical representation of the skill belief probability space. For example, the interpolation is linear and is carried out using natural parameters of a distribution in the exponential family of the skill belief probability distribution.

In an embodiment the statistics comprise a mean $\mu$ and a standard deviation $\sigma$ for each player and the interpolation is carried out on the parameters $\mu/\sigma^2$ and $1/\sigma^2$.

For example, the third statistics are calculated using the following equations where the first statistics are $\mu_{old}$ and $\sigma_{old}$, the second statistics are $\mu_{new}$ and $\sigma_{new}$, the third statistics are $\underline{\mu}$ and $\underline{\sigma}$, and the update level is $\alpha$:

$$\underline{\mu} = \frac{\alpha\mu_{new}\sigma_{old}^2 + (1-\alpha)\mu_{old}\sigma_{new}^2}{\alpha\sigma_{old}^2 + (1-\alpha)\sigma_{new}^2}$$

$$\underline{\sigma}^2 = \frac{\sigma_{old}^2\sigma_{new}^2}{\alpha\sigma_{old}^2 + (1-\alpha)\sigma_{new}^2}$$

Referring now to the apparatus examples:

Preferably the partial updater is arranged to form the at least one third statistic such that it's value between the associated first and second statistics is determined according to a level of update.

Preferably the partial updater is arranged to determine the level of update on the basis of one or more of: input received from a player; information about a level of experience of a player; information about whether players have repeatedly played against one another; information about whether any of the players are members of a team; information about a number of games played by a given player.

Preferably the processor is arranged to set the first statistics equal to the third statistics and repeat the method.

Preferably the partial updater is arranged to control the level of update such that a cumulation of the levels of update used is below a threshold when it receives information that the same players play against one another a plurality of times.

Preferably the partial updater is arranged to determine the third statistics by making an interpolation between the first and third statistics.

Preferably the partial updater is arranged to make the interpolation in a canonical representation of the skill belief probability space.

Preferably the partial updater is arranged to make a linear interpolation.

Preferably the partial updater is arranged to carry out the interpolation on the parameters $\mu/\sigma^2$ and $1/\sigma^2$ wherein the statistics comprise a mean $\mu$ and a standard deviation $\sigma$ for each player.

For example, the partial updater is arranged to calculate the third statistics using the following equations where the first statistics are $\mu_{old}$ and $\sigma_{old}$, the second statistics are $\mu_{new}$ and $\sigma_{new}$, the third statistics are $\underline{\mu}$ and $\underline{\sigma}$, and the update level is $\alpha$:

$$\underline{\mu} = \frac{\alpha\mu_{new}\sigma_{old}^2 + (1-\alpha)\mu_{old}\sigma_{new}^2}{\alpha\sigma_{old}^2 + (1-\alpha)\sigma_{new}^2}$$

$$\underline{\sigma}^2 = \frac{\sigma_{old}^2\sigma_{new}^2}{\alpha\sigma_{old}^2 + (1-\alpha)\sigma_{new}^2}$$

The invention also encompasses a computer program comprising computer program code means adapted to perform all the steps of any of the preceding claims when said program is run on a computer. For example, the computer program is embodied on a computer readable medium.

The methods described herein may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

DESCRIPTION OF THE DRAWINGS

The present description will be better understood from the following detailed description read in light of the accompanying drawings, wherein:

FIG. 1 is a schematic diagram of an apparatus for determining relative skills of players;
FIG. 2 shows an example skill belief distribution;
FIG. 3 is a graph of $\sigma$ against $\mu$ for a single player;
FIG. 4 is a graph of $1/\sigma^2$ against $\mu/\sigma^2$ for a single player;
FIG. 5 is a flow diagram of a method of determining relative skills of players.

Like reference numerals are used to designate like parts in the accompanying drawings.

DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different

examples.

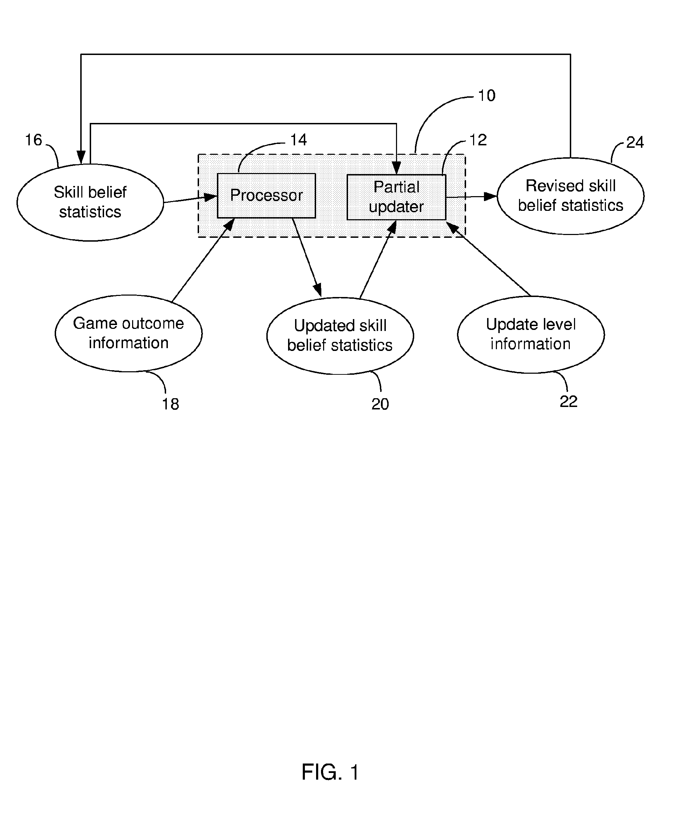

FIG. 1 shows an example apparatus 10 for determining relative skills of players of a game. The apparatus comprises a processor 14 and a partial updater 12 which may be integral or independent of one another. The processor 14 and partial updater 12 both comprise software implemented on suitable hardware such as a computer of any suitable type running an operating system or other platform software as known in the art. Alternatively, the processor and partial updater can be provided using dedicated hardware or in any other suitable manner.

The processor 14 is arranged to update skill belief distribution statistics using any suitable method. For example using a method of Bayesian scoring as described in our earlier US patent US 7,050,868 B1 , or in any other suitable manner. Thus the processor takes as input skill belief statistics 16, and game outcome information 18 and provides updated skill belief statistics 20. The updated skill belief statistics are provided to the partial updater 12 which also accesses update level information 22. The partial updater 12 provides revised skill belief statistics 24.

The skill belief statistics for a player comprise any one or more statistics relating to a skill belief distribution for that player. If the player is new to the system 10 then the skill belief statistics for that player may be set to default values. If the player has used the system before, the skill belief statistics are those previously output as revised skill belief statistics 24 for that player.

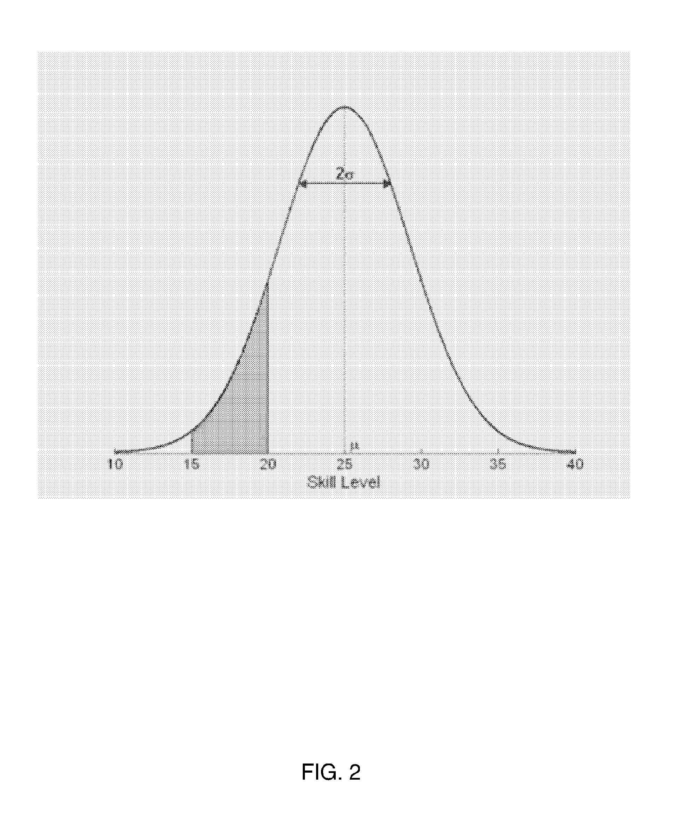

In a preferred example, a Gaussian distribution is used to represent belief about skill of a given player as illustrated in FIG. 2. This type of distribution is uniquely described by its mean $\mu$ and standard deviation $\sigma$. As indicated in FIG. 2 the area under the skill belief distribution curve with a certain range corresponds to the belief that the player's skill will lie in that range. For example, the shaded area in FIG. 2 represents the belief that the player's skill is within level 15 and 20. As the system learns more about a player's skill, $\sigma$ has a tendency to become smaller, more tightly bracketing that player's skill. However, it is not essential to use Gaussian distributions to represent skill belief; any other suitable type of distribution such as a bimodal or skewed distribution can be used.

The apparatus of FIG. 1 is applicable to situations where single skill belief statistics 16 are used for each player and equally to situations where a plurality of statistics 16 are used for each player. For example, different statistics can be used to represent varying skill for different games, game types and/or modes.

We have found that a mismatch can occur between players' intuitive expectations about their skill levels and automatic determinations of those skill levels. This leads to problems with discouraging players, especially where players are in teams and/or where there is a need to provide continuous reward and advancement for players.

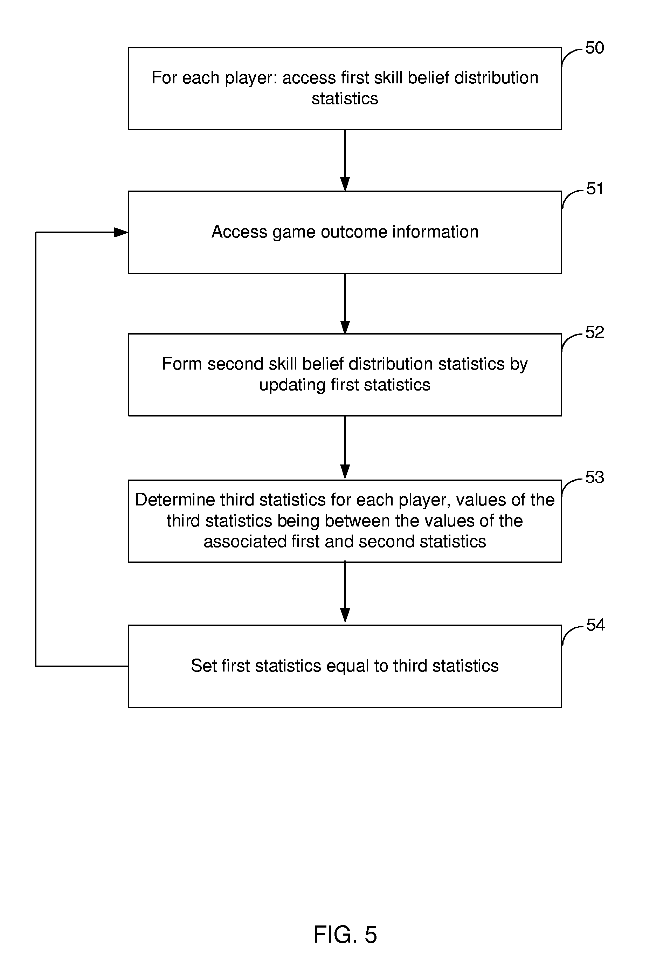

By revising the updated skill belief statistics using the partial updater 12 we are able to better match players intuitive expectations about their skill levels where required. For example, FIG. 5 is a high level flow diagram of a method of using the system of FIG. 1.

For each player, first skill belief distribution statistics are accessed (see box 50). Game outcome information is then received (see box 51) for a game involving the players. Second skill belief distribution statistics are then formed for each player by updating the first statistics (see box 52). This is achieved using the processor 14 of FIG. 1 as described above. The partial updater 12 then determines third statistics for each player (see box 53). The values of the third statistics are between the values of the first and second statistics for the same player. In this way a partial update, or damping down of the second statistics is achieved. The degree of "damping" or partial update is optionally specified by an update level value. The update level value is either preconfigured or is determined by the partial updater 12 on the basis of update level information 22. The first statistics are then set equal to the third statistics and the method repeats with the outcome of the next game.

In an example, the partial updater 12 determines the third statistics by making an interpolation between the first and second statistics for a given player. Any suitable type of linear or non-linear interpolation can be used.

By carrying out the interpolation in a natural or canonical representation of the skill belief probability space advantages can be achieved. In the case that linear interpolation is used this is advantageously carried out in the natural parameters of a distribution in the exponential family. An exponential family can be defined as follows.

Suppose that a random variable X takes values in S and that the distribution of X is dependent on *a*, which is an unspecified parameter having values in parameter space A. Both X and $\alpha$ may be vector-valued. The density function of X at *x* in S, corresponding to *a* in A is written as *f(x|a)*. Then the distribution of X is a k-parameter exponential family provided S does not depend on a and the density function f can be written as

$$f\left(x|a\right) = c\left(a\right)r\left(x\right)\exp\left[\sum_{i=1,...k} b_i\left(a\right)h_i\left(x\right)\right] \text{for} x \in S, a \in A$$

where r, $h_1$, $h_2$, ..., $h_k$ are functions on S and c, $b_1$, $b_2$, ... $b_k$ are functions on A. in addition, k is assumed to be the smallest such integer. Natural parameters of the distribution are for example, $b_1(a)$, $b_2(a)$, ... $b_k(a)$ and natural statistics of the distribution are for example $h_1(x)$, $h_2(x)$, ..., $h_k(x)$

This is now explained with reference to an example.

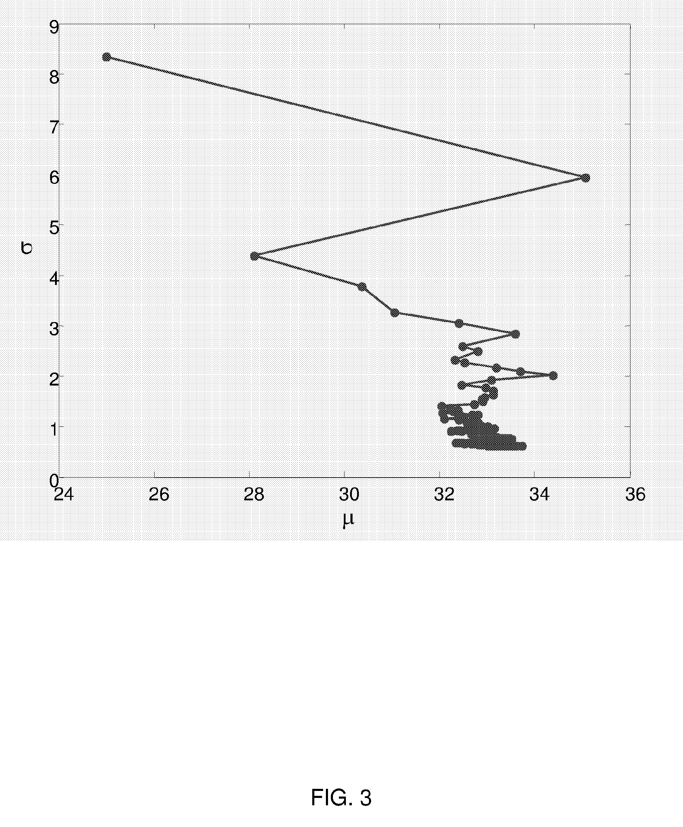

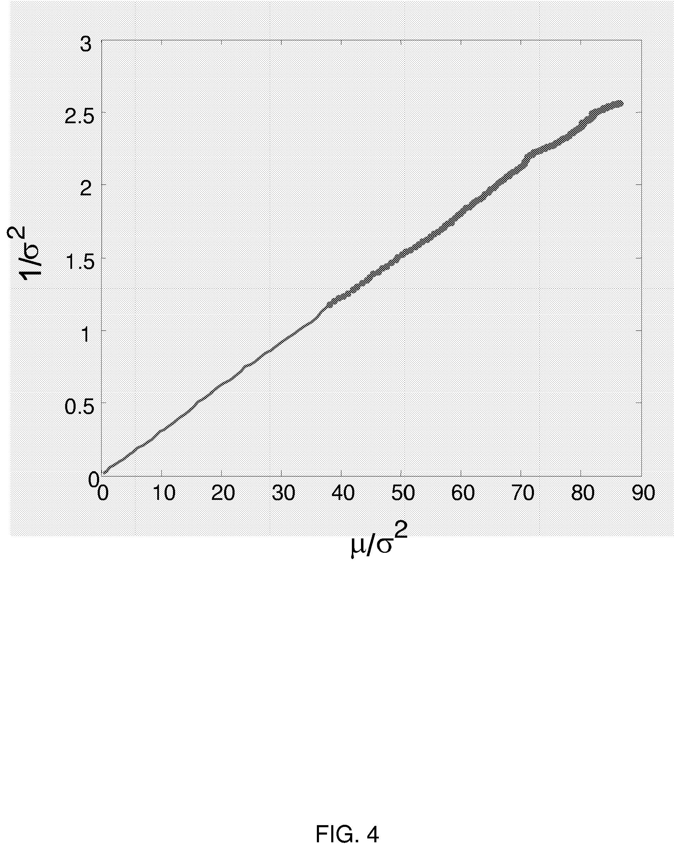

In the case that the belief distribution is represented using a Gaussian distribution and the skill belief statistics for a given player comprise a mean $\mu$ and a standard deviation $\sigma$ then a linear interpolation is advantageously carried out on the statistics $\mu/\sigma^2$ and $1/\sigma^2$. This is now explained with reference to FIGs. 3 and 4.

FIG. 3 is a graph of $\sigma$ against $\mu$ for a single player with each point on the graph representing the current estimates of $\mu$ and $\sigma$ after a game in which the player participated. It can be seen that as the player plays games the estimate of his or her skill belief moves down a zig-zag type line with $\mu$ gradually increasing as the player learns and $\sigma$ gradually dropping as the player's skill becomes more consistent. Because of the "zig-zag" nature of the plot in FIG. 3 it is not straightforward to make an interpolation between the estimated values of $\mu$ and $\sigma$ at the plotted points. We therefore use a parameterisation as illustrated in FIG. 4 which is a plot of $1/\sigma^2$ against $\mu/\sigma^2$ for the player of FIG. 3. It can be seen that this parameterisation yields a plot which is an approximate straight line such that linear interpolation is appropriate. In this example the natural or canonical representation of the skill belief probability space is the ($\mu/\sigma^2$, 1 /$\sigma^2$) space. The 2 natural statistics are : $b_1 = \dfrac{\mu}{\sigma^2}$ and $b_2 = \dfrac{1}{\sigma^2}$ . The linear interpolation is done in natural parameters, i.e. $b_i = b_{iold} + (1-\alpha)b_{inew}$ for all i in 1 ... k if there are k parameters.

In a particular example, we use a linear interpolation scheme on the $\mu/\sigma^2$ and $1/\sigma^2$ parameters. This is achieved using the following update equations where $\mu_{old}$ and $\sigma_{old}$ are the skill parameters of a player before the update (first statistics of FIG. 5); $\mu_{new}$ and $\sigma_{new}$ are the skill parameters of the player after a regular update by the processor (second statistics of FIG. 5); and $\underline{\mu}$ and $\underline{\sigma}$ are the skill parameters of the partial update (third statistics of FIG. 5). The update level, or strength of the partial update is given by $\alpha$. In this example, ($\alpha$=1 corresponds to a full, regular update and $\alpha$=0 corresponds to no update of the player skill as a result of the game outcome.

$$\underline{\mu} = \frac{\alpha\mu_{new}\sigma_{old}^2 + (1-\alpha)\mu_{old}\sigma_{new}^2}{\alpha\sigma_{old}^2 + (1-\alpha)\sigma_{new}^2}$$

$$\underline{\sigma}^2 = \frac{\sigma_{old}^2\sigma_{new}^2}{\alpha\sigma_{old}^2 + (1-\alpha)\sigma_{new}^2}$$

In this example the update level or factor $\alpha$ can be thought of as indicating how far to move along the "line" connecting two consecutive points on a skill trajectory (such as that of FIG. 3 or FIG. 4). As mentioned above, in the ($\mu/\sigma^2$, 1 /$\sigma^2$) space this trajectory is near linear. This is advantageous as reducing the update $\alpha$ by a factor v in the ($\mu/\sigma^2$, 1 /$\sigma^2$) space directly corresponds to disregarding a fraction (1-v) of the game outcome information.

However, it is not essential to work in the ($\mu/\sigma^2$, 1 /$\sigma^2$) space. For example, it is possible to use the following update equations or any other suitable update equations:

$$\underline{\mu} = \alpha\mu_{old} + (1-\alpha)\mu_{new}$$

$$\underline{\sigma}^2 = \alpha\sigma_{old}^2 + (1-\alpha)\sigma_{new}^2$$

As mentioned above, if players are new to a game then they usually have a steep learning curve which results in a significantly lower playing strength in the first few games. If an automated skill level assessment system determines a player's skill very quickly (i.e. using results of only a few games) such a system would assess the player's skill level at a low level in this type of case. It may then take the player many more games in order to improve his or her rating by the skill assessment system. This can discourage players, for example, who have high levels of transferable game skills but who are new to a particular game, from using the skill assessment system during their first games. The player may prefer to play independently of the skill assessment system until he or she is familiar with the game. Then the player can start using the skill assessment system to achieve a relatively high initial skill level. In order to address this problem, the partial updater may be used to learn a skill level for the player. For example, if a player indicates that he or she is new to the game, or if the skill assessment system has no previous knowledge of the player, the update level may be set to a low level, for example 0.25 and then dynamically increased to 1 once the player's skill level begins to plateau. Thus the update level can be dynamically adjusted on the basis of knowledge of past skill levels of the particular player and/or on the basis of thresholds, criteria, rules or other information about player behaviour in general. For example, the update level may be dynamically adjusted to ensure players enjoy a hill climbing experience and 'levelling-up' in terms of their assessed skill level. It may also be adjusted on the basis of the number of games the system has record of a given player participating in.

It is also possible for the partial updater to be used to assist where a plurality of players form a team. For example, those players may have different ability levels. Suppose that two players are experts at a particular game and they invite a third player to join their team. The third player is new to the particular game but has high levels of transferable skills. The skill assessment system takes the outcomes of a first few games involving the team. The individual players' skills might be learnt quickly with that for the third player being low. As a result, a combined skill level for the whole team is dragged down. This discourages teams of different ability players from forming. In order to address this, the update level for the third player may be reduced as compared with the update levels of the other team members. In order to achieve this, information about members of a team may be provided to the partial updater together with rules, thresholds or other criteria enabling an update level to be selected for each player.

Automatic skill level assessment systems may be open to manipulation in some situations where the same players play repeatedly against one another. This is because automated skill level assessment systems often assume that each game outcome is independent. However, this assumption is incorrect where the same players play repeated games. This can be addressed by reducing the level of update used each time the same players play against one another. Any suitable reduction can be used. For example, the update level may be 1 for a first game between players, then 1/2 for a second game between the same players, ¼ for the third game, 1/8 for the fourth game and so on. This results in a cumulative update of no more than 2 full updates.

It is also possible for players to set their own level of update prior to playing a game. For example, suppose a player knows he is a novice, he or she might set the level of update to a low level. Alternatively, a player might set the level of update as a way of 'gambling' against the automated skill assessment system.

Any suitable information can be used by the partial updater to set the update level. For example, in the case of games played on-line, network congestion levels may be used to influence the update level. In the case of network problems or other communication problems the update level can be set to zero or a low level to reduce the impact of that game outcome on skill assessment. Other information such as historical skill level data for particular players or categories of players, user input information, or other information about players and/or games can be used.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices

Any range or device value given herein may be extended or altered without losing the effect sought, as will be apparent to the skilled person.

The steps of the methods described herein may be carried out in any suitable order, or simultaneously where appropriate.

It will be understood that the above description of a preferred embodiment is given by way of example only and that various modifications may be made by those skilled in the art. The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the spirit or scope of this invention.

**Claims**

1. A method of determining an indication of the relative skill of at least a first player and a second player of a game based on the outcome of one or more such games involving those players said method comprising the steps of:

   (i) for each player, accessing at least one first statistic describing a probability distribution associated with belief about skill of that player;
   (ii) receiving information about the outcome of one of the games;
   (iii) forming at least one second statistic for each player by updating the at least one first statistics on the basis of the game outcome;
   (iv) determining at least one third statistic for each player, values of the third statistic being between the values of the associated first and second statistics.

2. A method as claimed in claim 1 wherein the at least one third statistic is formed such that its value between the associated first and second statistics is determined according to a level of update.

3. A method as claimed in claim 2 wherein the level of update is determined on the basis of one or more of: input received from a player; information about a level of experience of a player; information about whether players have repeatedly played against one another; information about whether any of the players are members of a team; information about a number of games played by a given player.

4. A method as claimed in any preceding claim which further comprises setting the first statistics equal to the third statistics and repeating the method.

5. A method as claimed in claim 4 wherein the method is repeated for the same players playing against one another a plurality of times and wherein the level of update is controlled such that a cumulation of the levels of update used is below a threshold.

6. A method as claimed in any preceding claim wherein the third statistics are determined by making an interpolation between the first and third statistics.

7. A method as claimed in claim 6 wherein the interpolation is made in a canonical representation of the skill belief probability space.

8. A method as claimed in claim 7 wherein the interpolation is linear and is carried out using natural parameters of a distribution in the exponential family of the skill belief probability distribution.

9. A method as claimed in any of claims 6 to 8 wherein the statistics comprise a mean $\mu$ and a standard deviation $\sigma$ for each player and where the interpolation is carried out on the parameters $\mu/\sigma^2$ and $1/\sigma^2$.

10. A method as claimed in claim 9 wherein the third statistics are calculated using the following equations where the first statistics are $\mu_{old}$ and $\sigma_{old}$, the second statistics are $\mu_{new}$ and $\sigma_{new}$, the third statistics are $\underline{\mu}$ and $\underline{\sigma}$, and the update level is $\alpha$:

$$\underline{\mu} = \frac{\alpha\mu_{new}\sigma_{old}^2 + (1-\alpha)\mu_{old}\sigma_{new}^2}{\alpha\sigma_{old}^2 + (1-\alpha)\sigma_{new}^2}$$

$$\underline{\sigma}^2 = \frac{\sigma_{old}^2\sigma_{new}^2}{\alpha\sigma_{old}^2 + (1-\alpha)\sigma_{new}^2}$$

11. A computer program comprising computer program code means adapted to perform all the steps of any of the preceding claims when said program is run on a computer.

12. A computer program as claimed in claim 10 embodied on a computer readable medium.

13. An apparatus (10) for determining an indication of the relative skill of at least a first player and a second player of a game based on the outcome of one or more such games involving those players said apparatus comprising:

   (i) an input arranged to access, for each player, at least one first statistic describing a probability distribution associated with belief about skill of that player;
   (ii) an input arranged to receive information about the outcome of one of the games;
   (iii) a processor (14) arranged to form at least one second statistic for each player by updating the at least one first statistics on the basis of the game outcome;
   (iv) a partial updater (12) arranged to determine at least one third statistic for each player, values of the third statistic being between the values of the associated first and second statistics.

14. An apparatus as claimed in claim 13 wherein the partial updater (12) is arranged to form the at least one third statistic such that its value between the associated first and second statistics is determined according to a level of update.

**15.** An apparatus as claimed in claim 14 wherein the partial updater (12) is arranged to determine the level of update on the basis of one or more of: input received from a player; information about a level of experience of a player; information about whether players have repeatedly played against one another; information about whether any of the players are members of a team.

**16.** An apparatus as claimed in any of claims 1 3 to 1 5 wherein the processor (14) is arranged to set the first statistics equal to the third statistics and repeat the method.

**17.** An apparatus as claimed in any of claims 13 to 16 wherein partial updater (12) is arranged to determine the third statistics by making an interpolation between the first and third statistics.

**18.** An apparatus as claimed in claim 17 wherein the partial updater (12) is arranged to make a linear interpolation.

**19.** An apparatus as claimed in claim 17 or claim 18 wherein partial updater is arranged to carry out the interpolation on the parameters $\mu/\sigma^2$ and $1/\sigma^2$ wherein the statistics comprise a mean $\mu$ and a standard deviation $\sigma$ for each player.

**20.** An apparatus as claimed in claim 19 wherein the partial updater is arranged to calculate the third statistics using the following equations where the first statistics are $\mu_{old}$ and $\sigma_{old}$, the second statistics are $\mu_{new}$ and $\sigma_{new}$, the third statistics are $\underline{\mu}$ and $\underline{\sigma}$, and the update level is $\alpha$:

$$\underline{\mu} = \frac{\alpha\mu_{new}\sigma_{old}^2 + (1-\alpha)\mu_{old}\sigma_{new}^2}{\alpha\sigma_{old}^2 + (1-\alpha)\sigma_{new}^2}$$

$$\underline{\sigma}^2 = \frac{\sigma_{old}^2\sigma_{new}^2}{\alpha\sigma_{old}^2 + (1-\alpha)\sigma_{new}^2}$$

FIG. 1

FIG. 2

FIG. 3

FIG. 4

For each player: access first skill belief distribution statistics — 50

Access game outcome information — 51

Form second skill belief distribution statistics by updating first statistics — 52

Determine third statistics for each player, values of the third statistics being between the values of the associated first and second statistics — 53

Set first statistics equal to third statistics — 54

FIG. 5

**European Patent Office**

**EUROPEAN SEARCH REPORT**

Application Number

EP 06 27 0064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 518 594 A (SEGA CORP [JP]) 30 March 2005 (2005-03-30) * paragraphs [0001], [0005], [0007] * * paragraphs [0008] - [0010] * * paragraphs [0023], [0065], [0068] * * paragraph [0071] * ----- | 1-20 | INV. A63F13/12 |
| Y | US 2005/209717 A1 (FLINT MICHAEL S [US] ET AL) 22 September 2005 (2005-09-22) * paragraphs [0002], [0009], [0010] * * paragraphs [0013], [0021], [0023] * * paragraphs [0041], [0042], [0044] * * paragraphs [0045], [0051], [0052] * * paragraph [0057]; claims 15-18 * ----- | 1-20 | |
| A | KR 2002 007 093 A (ELLICION INTERNETWORK CO LTD [KR]) 26 January 2002 (2002-01-26) * abstract * ----- | 1-20 | |

TECHNICAL FIELDS SEARCHED (IPC)

A63F

The present search report has been drawn up for all claims

| Place of search | Date of completion of the search | Examiner |
|---|---|---|
| The Hague | 13 December 2006 | Tito Martins, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 27 0064

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2006

| Patent document cited in search report | | Publication date | Patent family member(s) | | Publication date |
|---|---|---|---|---|---|
| EP 1518594 | A | 30-03-2005 | CN | 1607535 A | 20-04-2005 |
| | | | JP | 2005118543 A | 12-05-2005 |
| | | | KR | 20050030156 A | 29-03-2005 |
| | | | US | 2005070355 A1 | 31-03-2005 |
| US 2005209717 | A1 | 22-09-2005 | NONE | | |
| KR 2002007093 | A | | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7050868 B1